# EUROPEAN PATENT APPLICATION

(11) **EP 0 564 127 A2**
(43) Date of publication of application: **06.10.1993**
(21) Application number: 93302067.9
(22) Date of filing: 18.03.1993
(51) Int. Cl.: H04M 1/02

(54) **Chameleon apparatus housing unit**

(30) Priority: 30.03.1992 US 860521
(71) Applicant: AT&T Corp., New York, NY 10013-2412 (US)
(72) Inventor: Blonder, Greg E., Summit, New Jersey 07901 (US)
(74) Representative: Watts, Christopher Malcolm Kelway, Dr.

(57) **Abstract**

An apparatus housing that can have various exterior colors enabling the apparatus which the housing surrounds to be aesthetically pleasing in any environment in which the apparatus is located. Additionally, the housing unit provides a visual indication of information by changing color. The housing has a transparent substrate (6) as the exterior layer. Under the substrate is a layer of electrically switchable light modulating material (12) which is sandwiched between two electrically conductive layers (8, 10) that are connected to a voltage supply (18). A color forming means (30) is in contact or close proximity with the electrically switchable light modulating material and a background creating means (2) provides the alternating color for the visual indication.

## Description

### Field of the Invention

The present invention relates to an exterior housing unit and apparatus which can be made using such a housing. In particular, it concerns a housing which can be color-matched to any environment and which can provide a visual signal by changing color.

### Background of the Invention

While the primary function of a housing is to protect the enclosed apparatus, it is increasingly recognized that a housing also performs an aesthetic function. For example housings for equipment used within the home or office should have colors which blend with those of the surrounding room. However conventional housings are typically fixed in color at the time of manufacture, and the selection of color is typically limited. Accordingly, there is a need for providing the consumer with greater selection and control over the color of housings for household equipment.

Many products, in addition to requiring housings, also require signaling means for gaining a user's attention. For example telephones ring, clocks chime, and oven timers buzz. Such audio indications, however, are of little value to those whose hearing is impaired. Moreover equipment which depends solely on audio signaling is frequently set at annoying levels of volume, irritating frequencies and unpleasant rates of repetition. Accordingly, it is desirable to provide products with improved means for signaling observable by the hearing impaired and having enhanced aesthetic quality.

### Summary of the Invention

The present invention is a housing unit which can be color-matched to any environment and which can signal by changing color. The housing is comprised of a material whose color can be changed in response to an electrical signal. Specifically, the housing comprises a variable voltage source, a transparent substrate, and a layer of electrically switchable light modulating material sandwiched between transparent conductive layers. The conductive layers are connected to the variable voltage source, and a switch is provided for applying a voltage to the material or selected regions thereof upon receipt of a signal.

The color of the housing unit is determined by the voltage applied to the electrically switchable light modulating material, the pigment in the material, and the color of the underlying background. The material typically comprises pigmented crystallites suspended in a polymer matrix. Any color can be created by partitioning the first and second transparent conductive layers and the color responsive material into groups of narrow strips, each of which is dyed with a different color. A voltage is selectively supplied to certain strips to create a desired color. The color can be maintained over long periods in order to blend in with the surroundings or the color can be changed rapidly to provide a visual signal. The housing unit can also be used to hide features of an apparatus, such as displays, until these features are needed. Additionally, an apparatus having such a housing unit can be camouflaged into a second apparatus.

### Brief Description of the Drawings

FIG. 1 is a top view of a telephone having a color responsive housing unit.

FIG. 2 is a cross-sectional view of the housing unit of FIG. 1.

FIG. 3 is a diagrammatic view of the crystallite molecules in the polymer matrix when an electrical field is not applied to the material exhibiting the OFF state.

FIG. 4 is a diagrammatic view of the crystallite molecules in the polymer matrix when an electrical field is applied to the material exhibiting the ON state.

FIG. 5 is a diagrammatic view of the housing unit illustrating how it can appear in various colors.

### Detailed Description

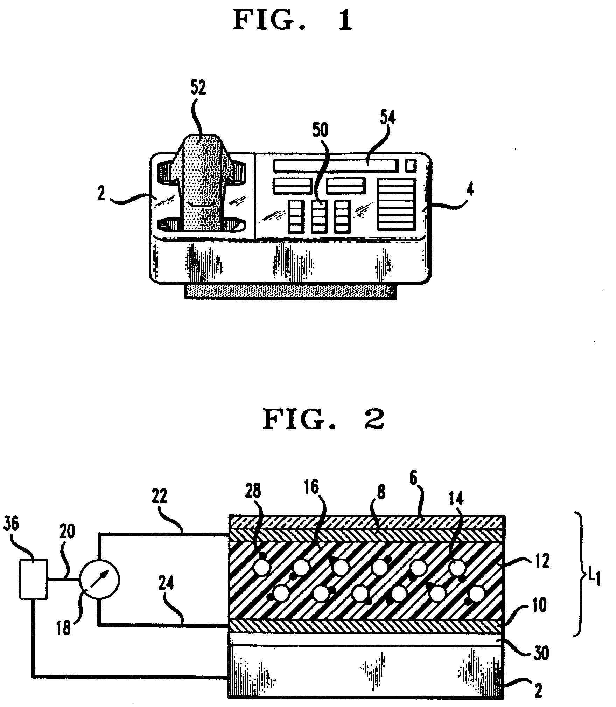

Referring to the drawings, FIG. 1 is a top view of apparatus 2, such as a telephone, having a color responsive housing unit 4. The color of the housing 4 can be adjusted so that the apparatus 2 will blend in or contrast with the environment. Additionally, the housing 4 can provide a visual signal by rapidly changing color.

As shown in FIG. 2, the housing unit 4 is preferably a composite material L1 comprised of a transparent substrate 6, a layer of electrically switchable light modulating material 12, transparent electrically conductive layer 8 and electrically conductive layer 10 disposed on opposite surfaces of layer 12, and a variable voltage source 18. The transparent substrate 6 is preferably the exterior layer of the housing unit 4. In the case of a telephone the substrate 6 is typically plastic, but the substrate composition can vary depending upon the nature of apparatus 2.

Underneath substrate 6 is a layer of electrically switchable light modulating material 12 sandwiched between layers 8 and 10 of electrically conductive material. Layer 12 can be an electrochromic material described in "E. C. Technology, No Longer a Lab Curiosity," Photonics Spectra, January, 1992, pg. 102-103, or a polymer dispersed liquid crystal such as described in "Polymer-Dispersed Liquid Crystals: Boojums at Work", MRS Bulletin, January, 1991, Volume XVI, Number 1, pg. 22-28. Electrically conductive layers 8 and 10 can be layers of indium tin oxide. Layer 10 can also be a reflective material such as aluminum.

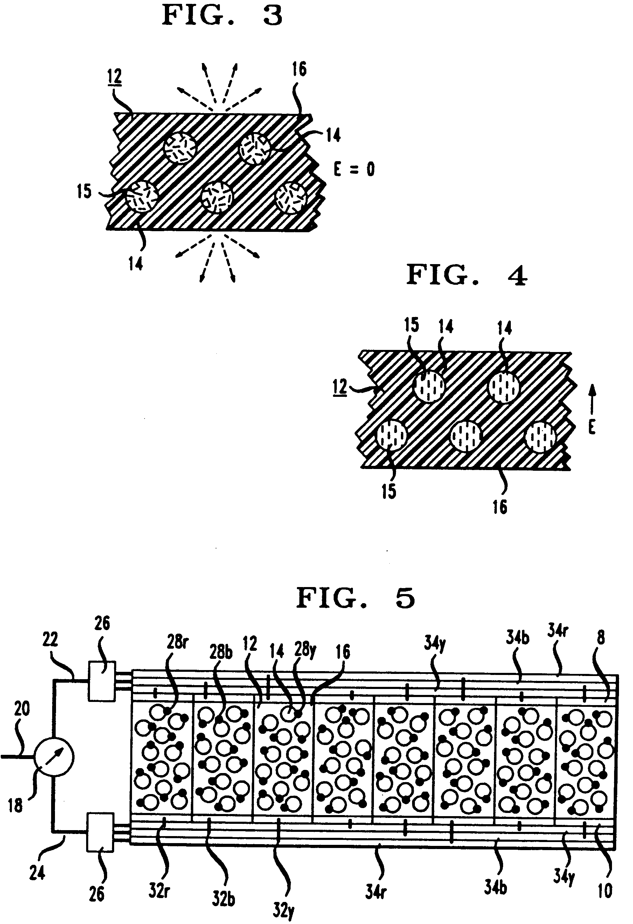

The electrically switchable light modulating material 12 typically comprises a birefringent, light transmissive polymer matrix 16 containing crystallites 14. The crystallites 14 either transmit or block light, dependent on the alignment of their molecules 15. The alignment of molecules is controlled by the application of an electrical field to the material 12. Thus the material 12 can exhibit OFF and ON states. FIG. 3 illustrates the material 12 in the OFF state. When no voltage is applied, the crystallite molecules 15 are randomly positioned, and light is blocked. FIG. 4 illustrates the ON state. An applied voltage aligns the crystallite molecules 15 permitting light to pass through the material. Thus, the application of a voltage causes the layer 12 to switch from opaque to transparent. Alternatively, layer 12 can be made to operate in a reverse mode such that layer 12 is transparent in the OFF-state and opaque in the ON-state.

The arrangement for applying suitable voltages to layer 12 is shown in FIG. 2. A variable voltage power source 18 is connected to conductive layers 8 and 10. The power source 18 can be an AC or DC voltage source for supplying a voltage between 0-30V. The power source has a control terminal 20 for controlling two terminals 22 and 24 disposed in electrical contact with layers 8 and 10, respectively. Upon receipt of a signal from a switch 36 on the control terminal 20 of the power source 18, a voltage is applied between layers 8 and 10 through terminals 22 and 24. The applied voltage changes the state of layer 12.

In the normal OFF state the housing 4 has an opaque color. To give color to the housing 4 in the OFF state pigment 28 is associated with the crystallites 14 in layer 12. When no voltage is applied to layer 12, the housing 4 is opaque and appears to be the color of the pigment. When voltage is applied, the layer 12 becomes transparent and the housing takes on the color of the underlying background. A choice of colors for the housing 4 can be achieved by partitioning layers 8, 10 and 12 into narrow strips. The strips are grouped, and each strip in a group has a different color pigment, e.g. red, blue or yellow. The pigment pattern is repeated for each group. Extending bus bars 32 connect the strips to common terminal bus bars 34 such that strips 12 having the same pigmentation 28r, 28b, 28y are connected to the appropriate common terminal bus bars 34r, 34b, 34y. The common terminal bus bars 34r, 34b and 34y are switchably connected to terminals 22 and 24 of the voltage source 18. Switch 26 selects the appropriate common terminal bus bars 34r, 34b or 34y. Additional colors can be synthesized by adjusting the relative voltages from the voltage source 18.

The switch 36 has three primary functions. First the switch 36 determines when voltage source 18 supplies a voltage to the electrically conductive layers 8 and 10. Second, the switch determines how much voltage is supplied, and third, the switch determines to which common terminal bus bars 34 the voltage is supplied. These parameters control the color of the housing.

The receipt of a switching signal on the control terminal 20 of the voltage source 18 causes the housings 4 to rapidly flash between the color of the housing and a background color. The layer 12 rapidly alternates between the ON and OFF states. In the ON state the material 12 is transparent enabling a background color located beneath the second transparent electrically conductive material 10 to appear.

The background color can be achieved in a number of ways. It can simply be the inside color of the apparatus 2 or be a colored substrate layer 30 located under layer 10.

By using multiple colors, the housing 4 can transmit multiple signals. For example flashing red can indicate a call is being received and flashing blue can indicate a stored message. If the material 12 is partitioned into various colored narrow strips, multiple color signaling can be achieved by varying the switch settings which determine the color of housing 4.

For example, assume the pigmentation 28 associated with the crystallites 14 in the strips of electrically switchable light modulating layer 12 are red, blue and yellow. Then in order to produce a red signal, a voltage is applied to the common terminal bus bars 34b, 34y. The applied voltage causes the blue and yellow strips to become transparent, and the red color shines through the transparent substrate 6. In order to provide a green signal, a voltage is applied to the common terminal bus bar 34r in contact with the red strips of electrically switchable light modulating material 12. The resulting electrical field causes the red strips 12 to become transparent, and the housing 4 appears green. Numerous colors can be obtained in this manner.

Alternatively to partitioning layer 12, multiple color signaling can be effected by either color partitioning layer 30 into narrow strips (not shown) or a second layer of electrically switchable material and associated conductive layers which are color partitioned (not shown) disposed underlying layer 10. The colors are achieved in the same fashion as described for layer 12.

Another advantage of housing 4 is that it can provide repertoire of patterns or geometric designs. The designs can be patterned into either layer 12, the electrically conductive layers 8 and 10, the background layer 30 or the substrate 6. A further advantage of housing 4 is that items as buttons 50, clocks 54 and displays 54 can be hidden under opaque regions of housing 4 until a signal causes the region to become transparent. The button 50, clock and/or display 54 then appear. The composite material L1 can also be partitioned to be the display and/or clock. Yet another advantage of the housing is that an apparatus such as a flat panel telephone can be camouflaged into the top of a desk, a wall, or even the door of a refrigerator. The housing 4 can have the same color and design as the desk, wall or refrigerator. The apparatus being the camouflaged remains hidden until a signal activates the voltage source 18 connected with modulating material 12.

In the particular case of a telephone, the buttons 50 on the face of the phone can be membrane switches whose surface is composed of the same material as the housing 4. The placement of a call can be initiated by a voice recognition device located within the telephone or by pressing an area on the surface of the telephone. Communication can be by hands free duplex speakers or a handset 52 which is enclosed in a recessed cavity within the telephone body. A retractable door in the face of the telephone can cover the recessed cavity maintaining a flat surface for the telephone.

Additionally, the housing 4 can be divided into a number of segments such that only one segment of the housing unit 4 can color match the environment and provide a signal by changing color. For example the color changing portion of the housing can be an overlay for the face of a telephone.

It is also contemplated that the present invention may be incorporated in a wristband which changes in color to indicate a receipt of information by an apparatus which said wristband is attached to.

## Claims

1. A housing unit which changes in color to indicate a receipt of information by an apparatus which said housing is surrounding comprising:
a variable electrical voltage source (18) having a control terminal (20) and a first and second controllable terminals (22, 24);
a first transparent substrate (6);
a first transparent electrode means (8) on the bottom surface of said first substrate connected to said first controllable terminal of said variable voltage source;
a layer (12) of electrically switchable light modulating material that is in contact with said first transparent electrode means;
a second electrode means (10) in contact with said electrically responsive material and connected to said second controllable terminal of said variable voltage source;
a color-forming means (30) in contact with or in close proximity with said electrically switchable light modulating material; and
at least one switching means (36) for selectively applying a voltage from said variable voltage source at selective levels of voltage to said first and second electrode means, so that when a control signal which is generated by or received by said apparatus, is received on the control terminal of said variable electrical voltage source a voltage is applied across the first and second electrode means that causes the state of electrically switchable light modulating material to change, whereby the apparatus as viewed through the substrate appears to change color.

2. A housing unit as in claim 1, wherein the first transparent electrode means is a layer of indium tin oxide.

3. A housing unit as in claim 1, wherein the electrically switchable light modulating material has crystallites that are suspended in a polymer matrix and the color-forming means is a pigmentation associated with the crystallites in the electrically switchable light modulating material.

4. A housing unit as in claim 1 wherein the second electrode means is transparent.

5. A housing unit as in claim 1 wherein the second electrode means is a layer of aluminum.

6. A housing unit as in claim 1, wherein said first and second electrode means and said electrically switchable light modulating material are divided into narrow strips, each electrically switchable light modulating strip is dyed with a different color, the strips of electrically switchable light modulating material having the same color and the corresponding first and second electrode means are grouped together, each group is separately connected to said switching means which selectively applies a voltage to the first and second electrode means of a selected group.

7. A housing unit as in claim 1, wherein the color-forming means is a colored substrate located under the second electrode means and said colored substrate is partitioned into narrow strips having different colors.

8. A housing unit as in claim 7, wherein said first and second electrode means, said electrically switchable light modulating material and said colored substrate are divided into narrow strips, each colored substrate strip has a different color, the strips of colored substrate having the same color and the corresponding first and second electrode means and electrically switchable light modulating material are grouped together, each group is separately connected to said switching means which selectively applies a voltage to the first and second electrode means of a selected group.

9. A housing unit as in claim 1, further comprised of a background creating means in contact with or in close proximity underneath said second electrode means, wherein the background creating means is a colored substrate located underneath said second transparent electrode means and said colored substrate is partitioned into narrow strips having different colors.

10. A housing unit as in claim 9, wherein the background creating means is comprised of:
an electrically switchable light modulating material, which is sandwiched between a third and fourth electrode means, wherein said third and fourth electrode means are connected to a variable voltage source and at least one switching means for selectively applying a voltage from said voltage source at selective levels of voltage to said third and fourth electrode means, wherein said third and fourth electrode means and said electrically switchable light modulating material are divided into narrow strips, each electrically responsive strip is dyed with a different color, the strips of electrically switchable light modulating material having the same color and the corresponding third and fourth electrode means are grouped together, each group is separately connected to said switching means which selectively applies a voltage to the first and second transparent electrode means of a selected group.

11. A housing unit as in claim 1, wherein said variable voltage is supplied to said first and second electrode means when a signal is sent from an auxiliary device to the control terminal of said voltage source.

12. A housing unit as in claim 1, wherein the apparatus is integrated into a second apparatus.

13. A telephone adapted to be integrated into another apparatus comprised of:
a) a face panel wherein said face panel is comprised of:
a variable electrical voltage source having a control terminal and a first and second controllable terminals;
a first transparent substrate;
a first transparent electrode means on the bottom surface of said first substrate connected to said first controllable terminal of said variable voltage source;
a layer of electrically switchable light modulating material that is in contact with said first transparent electrode means;
a second electrode means in contact with said electrically switchable light modulating material and connected to said second controllable terminal of said variable voltage source;
a color-forming means in contact with or in close proximity with said electrically responsive material; and
at least one switching means for selectively applying a voltage from said variable voltage source at selective levels of voltage to said first and second electrode means, so that when a control signal which is generated by or received by said telephone, is received on the control terminal of said variable electrical voltage source a voltage is applied across the first and second electrode means that causes the state of electrically responsive material to change, whereby the telephone as viewed through the substrate appears to change color.
b) means for dialing; and
c) means for transmitting and receiving conversation.

14. A wristband which changes in color to indicate a receipt of information by an apparatus which said wristband is attached to comprising:
a variable electrical voltage source having a control terminal and a first and second controllable terminals;
a first transparent substrate;
a first transparent electrode means on the bottom surface of said first substrate connected to said first controllable terminal of said variable voltage source;
a layer of electrically switchable light modulating material that is in contact with said first transparent electrode means;
a second electrode means in contact with said electrically responsive material and connected to said second controllable terminal of said variable voltage source;
a color-forming means in contact with or in close proximity with said electrically switchable light modulating material; and
at least one switching means for selectively applying a voltage from said variable voltage source at selective levels of voltage to said first and second electrode means, so that when a control signal which is generated by or received by said apparatus, is received on the control terminal of said variable electrical voltage source a voltage is applied across the first and second electrode means that causes the state of electrically switchable light modulating material to change, whereby the wristband as viewed through the substrate appears to change color.

15. A method of indicating information by changing the exterior coloring of a housing unit which surrounds an apparatus comprising the steps of:
a) associating a color forming means with a layer of electrically switchable light modulating material so that said housing unit appears to be the color of the color forming means;
b) generating a control signal upon the receipt of information;
c) creating an electrical field around said layer of electrically switchable light modulating material in response to said control signal causing said layer of electrically responsive material to become transparent; and
d) passing an alternate color through said layer of electrically switchable light modulating material causing said housing unit to be a different color.
